Europäisches Patentamt

European Patent Office

Office européen des brevets

(19)

(11) **EP 1 197 477 A1**

(12) **EUROPÄISCHE PATENTANMELDUNG**

(43) Veröffentlichungstag:
**17.04.2002 Patentblatt 2002/16**

(51) Int Cl.$^7$: **C03C 4/00**

(21) Anmeldenummer: **01124674.1**

(22) Anmeldetag: **09.10.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **11.10.2000 DE 10050349**

(71) Anmelder:
• **Schott Glas**
**55122 Mainz (DE)**
Benannte Vertragsstaaten:
**BE CH DE DK ES FI FR GR IE IT LI LU MC NL PT SE TR AT CY**
• **CARL-ZEISS-STIFTUNG trading as Schott Glas**
**55122 Mainz (DE)**
Benannte Vertragsstaaten:
**GB**

(72) Erfinder:
• **Mörsen, Ewald, Dr.**
**55130 Mainz (DE)**
• **Speit, Burkhard, Dr.**
**07749 Jena (DE)**
• **Strenge, Lorenz**
**55218 Ingelheim (DE)**
• **Kandler, Jörg, Dr.**
**07749 Jena (DE)**

(74) Vertreter: **Fuchs Mehler Weiss & Fritzsche, Patentanwälte**
**Naupliastrasse 110**
**81545 München (DE)**

(54) **Verfahren zur Bestimmung der Strahlenbeständigkeit von Kristallen**

(57) Die Erfindung betrifft ein Verfahren zur Bestimmung der Strahlenbeständigkeit von Kristallen gegenüber Arbeitswellenlängen beim späteren Gebrauch durch Bestimmung der Änderung des Absorptionskoeffizienten vor und nach Bestrahlung des Kristalls mit einer energiereichen Strahlungsquelle. Dabei wird in einer ersten Messung am Kristall oder einem Spaltstück hiervon über einen zuvor festgelegten Wellenbereich von $\lambda_1$ bis $\lambda_2$ mittels eines Spektrophotometers ein Absorptionsspektrum A bestimmt und anschließend der Kristall oder das Spaltstück mit der energiereichen.

Strahlungsquelle unter Ausbildung sämtlicher theoretisch möglicher Farbzentren bestrahlt. In einer zweiten Messung des so bestrahlten Kristalles bzw. Spaltstükkes wird über den gleichen Wellenbereich von $\lambda_1$ bis $\lambda_2$ ein Absorptionsspektrum B bestimmt und das Flächenintegral des aus dem Absorptionsspekrum A und dem Absorptionsspektrum B gebildeten Differenzspektrums über den Bereich der Wellenlänge $\lambda_1$ bis $\lambda_2$ bestimmt und durch die Dicke D des Kristalles dividiert. Auf diese Weise läßt sich der beim späteren Gebrauch durch die Arbeitsstrahlung induzierbare Absorptionskoeffizient $\Delta k$ bestimmen.

Figur 1

**Beschreibung**

Die Erfindung betrifft ein Verfahren zur Bestimmung der Strahlenbeständigkeit von Kristallen, insbesondere von Kristallen für optische Elemente wie z. B. Linsen, sowie die Verwendung derart bestimmter Kristalle zur Herstellung von optischen Bausteinen und elektronischen Geräten.

Es hat sich gezeigt, dass bei der Bestrahlung von Kristallen an Kristallbaufehlern und an durch Fremdatome hervorgerufenen Kristallfehlern Farbzentren entstehen. Dies bedeutet: Je mehr Licht bzw. elektromagnetische Wellen in den Kristall eingestrahlt wird, um so größer ist die Anzahl der gebildeten Farbzentren, wodurch sich die Lichtabsorption im Kristall erhöht bzw. die Lichtdurchlässigkeit verringert. Die Bildung solcher Farbzentren und der damit verbundenen Abnahme der Strahlendurchlässigkeit hat sich insbesondere bei optischen Bauteilen als problematisch erwiesen, durch die energiereiches Licht, wie z. B. Laserstrahlen geleitet wird, wie dies bei Steppern geschieht, mit denen Strukturen integrierter Schaltungen auf photolackbeschichtete Wafer optisch projiziert werden.

Auch beim optischen Aufbau von Lasern spielt diese Bildung von Farbzentren eine große Rolle. Es ist deshalb bereits versucht worden, Kristalle in hoher Perfektion und in einer solchen Reinheit herzustellen, dass sie annähernd frei von Fremdatomen und Filterfehlern sind. Da jedoch bereits Verunreinigungen von < 1 ppm in optischen Bauteilen, insbesondere solchen für die DUV-Photolithographie (Deep Ultra Violet, $\lambda$ < 250 nm) merklich stören, muss jeder gezüchtete Kristall vor seiner Verwendung als optisches Bauteil auf seine Strahlenbeständigkeit geprüft werden. Dabei wurde bislang derart vorgegangen, dass aus einem zu untersuchenden Kristall ein Probenkörper mit einer Länge von etwa 1-10 cm und einem Querschnitt von etwa 2,5 cm x 2,5 cm geschnitten wurde. Anschließend wurden die Stirnseiten fein poliert und mittels eines Lasers bestrahlt. Dazu wurden üblicherweise mit einem ArF-Excimer-Laser bei einer späten Arbeitswellenlänge der Steppers von 193 nm bzw. mit einem F2-Excimer-Laser bei einer Arbeitswellenlänge von 157 nm bestrahlt. Die Energiedichte betrug dabei in der Regel 1 - 100 mJ/cm$^2$ bei einer Pulsfrequenz von 50 - 500 Hz und einer Pulszahl von $10^4$-$10^7$. Dabei wurde die Absorption der Probe vor und nach der Laserbestrahlung bei der jeweiligen Arbeitswellenlänge mittels eines Spektrophotometers bestimmt und aus den beiden erhaltenen Werten die laserinduzierte Transmissionsabnahme berechnet. Die Umrechnung auf den Absorptionskoeffizienten wurde dann gemäß dem von K.R. Mann und E. Eva in "Characterizing the absorption and aging behaviour of DUV optical material by high-resolution excimer laser calorimetry", SPIE Vol. 3334, Seite 1055 beschriebenen Verfahren berechnet.

Aufgrund der so festgestellten Strahlenbeständigkeit kann dann die Position ermittelt werden, die das verwendete kristalline Material als optisches Bauelement in der Gesamtoptik einnimmt. Da die Energiedichte des in die Optik eingestrahlten Lichtes für die jeweiligen Anwendungswellenlängen für verschiedene Positionen in der Optik unterschiedlich ist, können für die am weitesten außen, d.h. zum Strahleingang liegenden Optikelemente, nur solche Kristalle verwendet werden, die eine besonders hohe Strahlenbeständigkeit zeigen. Zu den hoch belasteten Bauteilen zählen aber auch diejenigen Optikelemente, in denen der Laserstrahl besonders fokussiert wird. Darüber hinaus bedeutet die Ausbildung vieler Farbzentren eine höhere Absorption bei höherer Energiedichte, d.h. dass mehr Strahlungsenergie im Kristall deponiert wird. Dies hat zur Folge, dass sich das kristalline Material und damit die optische Linse erwärmt, wodurch sich auch deren Brechungsindex und somit die Abbildungseigenschaften ändern. Je höher also die Strahlenbeständigkeit ist, um so weniger Energie wird im Linsensystem in Wärme umgewandelt.

Zur Durchführung dieses Prüfverfahrens muss eine hohe Kapazität an teuren Excimer-Lasern bereitgestellt werden, die außerdem einen hohen Aufwand an Wartung benötigen.

Durch das aufwendige Herrichten des Probenstücks ist daher die Zeitspanne zwischen der Entnahme eines Rohkristalles aus dem Zuchttiegel und der Feststellung über dessen Eignung für eine Anwendung, die eine hohe Strahlenbeständigkeit voraussetzt, äußerst groß. Dies bedeutet auch, dass durch die zeitraubenden Materialtests von über einem Monat nicht nur ein hoher Materialeinsatz, sondern auch eine zusätzliche teure Lagerung für die großen Rohkristalle vor der Materialzuteilung notwendig ist.

In I. Toepke and D. Cope "Improvements In Crystal Optics For Excimer Lasers", SPIE Vol. 1835 Excimer Lasers (1992) Seiten 89-97 wird die Ausbildung von Farbzentren in optischen Materialien durch Bestrahlung mittels einer Kobaltquelle bei 1 MegaRad-Dosen beschrieben. Dabei wird auch beschrieben, dass der so erhaltene Strahlenschaden gut mit demjenigen korreliert, wie er durch Excimer-Laser erzeugt wird.

Dieses Verfahren hat jedoch zum Nachteil, dass hier die strengen Vorschriften beim Umgang mit hoch radioaktivem Material beachtet werden müssen, weshalb dieses in der Praxis nicht geeignet ist.

Zudem wird auch bei dieser Messtechnik ein hoher Anteil an aufwendig gezüchtetem Kristallmaterial verbraucht, wodurch die Gesamtausbeute der Kristallzucht weiter verringert wird. Darüber hinaus müssen die Kristallteile hierfür mittels Sägen und Polieren der Messstange zeitaufwendig und kostspielig präpariert werden.

Die Erfindung hat daher zum Ziel, ein schnelles und preiswertes Verfahren zur sicheren Bestimmung der Strahlenbeständigkeit von Kristallen bereitzustellen, welches mit einfachen, billigen Mitteln ohne hohen Materialverlust durchführbar ist.

Dieses Ziel wird durch das in den Ansprüchen definierte Verfahren erreicht.

Erfindungsgemäß wurde nämlich gefunden, dass man die zu erwartende Beständigkeit von Kristallen gegenüber einer starken Bestrahlung mit einer beliebigen Wellenlänge an einem beliebigen, undefinierten und unbehandelten Kristall oder einem Spaltstück vorherbestimmen kann, indem man über einen festen Wellenlängenbereich von einer Wellenlänge $\lambda_1$ bis zu einer Wellenlänge $\lambda_2$ das Flächenintegral des Differenzspektrums, gebildet aus den Spektren vor und nach der Bestrahlung, bestimmt.

Dabei wird üblicherweise so vorgegangen, daß man über einen beliebigen zuvor festgelegten Bereich von einer Wellenlänge $\lambda_1$ bis zu einer Wellenlänge $\lambda_2$ ein Transmissionsspektrum (Spektrum A) bestimmt; dann den Kristall vorzugsweise mit einer kurzwelligen, energiereichen Strahlung anregt und zwar vorzugsweise so lange, bis sich sämtliche bzw. annähernd sämtliche theoretisch möglichen Farbzentren ausgebildet haben. Danach wird im gleichen Wellenlängenbereich $\lambda_1$ bis $\lambda_2$ wie vor der Bestrahlung erneut ein Transmissionsspektrum (Spektrum B) des Kristalls ermittelt. Es hat sich nun gezeigt, dass die Differenz der Flächenintegrale von $\lambda_1$ bis $\lambda_2$ der Transmissionskurven vor der Bestrahlung und nach der Bestrahlung ein Maß für die Strahlenbeständigkeit ist, und in linearer Beziehung zu der zu erwartenden maximalen Änderung des Absorptionskoeffizienten $\Delta k$ steht. Vorzugsweise wird das Spektrum mittels eines Spektrophotometers bestimmt. Darüber hinaus hat es sich als zweckmäßig erwiesen, das Spektrum bezüglich der Dicke des Kristalls (= Länge des Lichtweges im Kristall) zu normieren.

Dieses Ergebnis ist um so überraschender, da das jeweilige Absorptions- bzw. Transmissionsspektrum für jeden Kristall unterschiedlich ist, da es von den jeweiligen Verunreinigungen und Kristallfehlern erzeugt wird.

Es ist daher ohne weiteres möglich, eine Eichkurve zu erstellen indem man, wie zuvor beschrieben, das Flächenintegral des Differenzspektrums bestimmt und dieses gegen die am gleichen Kristall mit dem herkömmlichen Verfahren bestimmte Strahlenschädigung aufträgt bzw. mit dieser vergleicht. Das herkömmliche Verfahren ist beispielsweise in dem zuvor erwähnten Stand der Technik von K.R. Mann und E. Eva, SPIE Vol. 3334, Seite 1055 beschrieben. Aus den so erhaltenen Werten wird eine lineare Eichkurve erhalten. Mit dem herkömmlichen Verfahren ist es möglich durch leichtes Erwärmen die gebildeten Farbzentren thermisch wieder zu eliminieren, so daß beide Messungen am gleichen Kristall durchgeführt werden können. Es ist zwar möglich, die Eichkurve anhand eines einzigen Wertepaares zu ermitteln, jedoch ist es insbesonders aufgrund der Laserinstabilität bevorzugt, die Eichkurve an Kristallen mit unterschiedlicher Reinheit bzw. Strahlungsbeständigkeit zu bestimmen. Eine einmal ermittelte Eichkurve ist für das jeweilige Kristallmaterial spezifisch. Würde beispielsweise die Eichkurve an einem $CaF_2$-Kristall bestimmt, so ist sie für alle $CaF_2$-Kristalle, nicht jedoch für z. B. $BaF_2$ gültig.

Dabei werden die Strahlenschäden im herkömmlichen Verfahren vorzugsweise mit derjenigen Wellenlänge erzeugt, welche auch in der späteren Optik angewendet werden soll. Die dabei erhaltenen Strahlenschäden werden dann mit den erfindungsgemäß erhaltenen Flächenintegralen der Differenzspektren zu einer Eichkurve aufgetragen. Geeignete Strahlenquellen zur Durchführung der erfindungsgemäß induzierten Absorption sind Röntgenstrahlen sowie andere energiereiche Strahlen, wie beispielsweise radioaktive Strahlung, z.B. $Co^{60}$. Wegen ihrer billigen und einfachen Handhabung sowie ihrer leichten Verfügbarkeit sind erfindungsgemäß jedoch Röntgenstrahlen besonders bevorzugt.

Die mittels Röntgenstrahlung erzeugte Verfärbung (Strahlenschaden) belegt einen weiteren überraschenden Unterschied zum klassischen bekannten Laserschaden (Laser-Dammage). Während nämlich die durch Laserstrahlung erzeugte Kristallverfärbung bei Raumtemperatur eine Halbwärtszeit von ca. 1 Tag aufweist, d.h. sich rasch wieder erholt, verbleibt die durch Röntgenstrahlung erzeugte Verfärbung selbst bei monatelanger Lagerung im Dunkeln erhalten.

Ein weiterer wichtiger Unterschied des mittels Röntgenstrahlung und Laserstrahlung erzeugten Strahlungsschadens ist, dass sich dieser mittels Bestrahlung durch Laserlicht der gleichen Wellenlänge aber geringerer Energie rasch relaxieren läßt.

Die zur Durchführung des erfindungsgemäßen Verfahrens notwendige Energiedichte ist über weite Bereiche variabel und hängt lediglich davon ab in welchem Zeitraum die Sättigung erreicht werden soll. Üblicherweise werden jedoch Energiedichten von $10^3$ - $10^5$ Gy, vorzugsweise $5 \times 10^3$ - $5 \times 10^4$ Gy verwendet. Die Bestrahlungszeit beträgt hierbei üblicherweise 10 - 360 Minuten, vorzugsweise 30 - 180 Minuten bis zur Sättigung. Zur Kontrolle der Sättigung kann erfindungsgemäß eine zweite Bestrahlung an der Probe durchgeführt werden und die Intensität der Absorptionsbanden bzw. des Absorptionsspektrums miteinander verglichen werden. Sind dabei keine Änderungen der Intensitäten mehr zu finden, wurde mit der Bestrahlung die gewünschte Sättigung erreicht.

Der Wert des erfindungsgemäß bestimmten Flächenintegrals des Differenzspektrums, bzw. die Differenz der Flächenintegrale der Absorptions/Transmissionsspektren vor und nach der Bestrahlung ist natürlich auch vom gewählten Wellenlängenbereich abhängig. Ist allerdings dieser beliebig auszuwählende Bereich festgelegt, dann ist diese Fläche für das jeweilige Material ein Maß für dessen Strahlungsbeständigkeit.

Der feste Wellenlängenbereich von $\lambda_1$ bis $\lambda_2$, in dem das Absorptionsspektrum bestimmt wird, umfasst vorzugsweise die spätere Arbeitswellenlänge der Optik. Es hat sich jedoch gezeigt, dass der feste Wellenlängenbereich auch außerhalb der späteren Arbeitswellenlänge liegen kann. Er sollte jedoch aus Sicherheitsgründen nicht zu weit von der späteren Arbeitswellenlänge entfernt sein.

Um zu gewährleisten, dass wirklich alle Farbzentren im Kristall angeregt werden, sollte die Dicke des bestrahlten Kristalls bzw. der Spaltstücke nicht zu groß sein, da bei größeren Dicken je nach Strahlenbeständigkeit des Kristalls nicht gewährleistet ist, dass eine homogene Durchdringung des gesamten Materials stattfindet und womöglich der größte Teil der einfallenden Strahlung bereits im ersten Teil der durchstrahlten Dicke absorbiert wird. Dies würde zu einer unterschiedlichen Ausbildung von Farbzentren in Abstand von der Kristalloberfläche führen, durch welche der Strahl in den Kristall eintritt.

Dabei ist zu beachten, dass jeweils Bestrahlungsbedingungen ausgewählt werden, bei denen alle Farbzentren angeregt bzw. ausgebildet werden können. Wird nun das Spektrum vor der Bestrahlung mit dem Spektrum nach der Bestrahlung verglichen, so gibt deren Differenz direkt den Sättigungszustand wider und zeigt im ausgewählten Wellenbereich die Absorption mit maximaler Intensität, die bei der Bestrahlung mit Wellenlängen unterhalb der späteren Arbeitswellenlänge erzeugt werden können.

Ein großer Vorteil der Erfindung liegt darin, dass die Spaltstücke weder poliert noch deren Dicke genau eingestellt werden muss. Es können somit beliebige Spaltstücke verwendet werden. Da Kristalle üblicherweise entlang ihrer Kristallachsen brechen, sind immer parallel verlaufende Oberflächen vorhanden, welche für die Messung des Absorptionsspektrums im Spektrophotometer zur Verfügung stehen. Der Abstand der Oberfläche voneinander, d. h. die Dicke des Kristalls bzw. die Weglänge des Lichtes im Kristall kann bequem mittels einer Schublehre oder einer Mikrometerschraube bestimmt werden. Zur Bestimmung der Absorption bzw. des Strahlenschadens steht der den Kristall durchdringender Lichtstrahl des Spektrophotometers vorzugsweise senkrecht zur Kristalloberfläche.

Die Differenzbildung aus den beiden Absorptionsmessungen vor der Bestrahlung A und nach der Bestrahlung B ergibt ein Differenzspektrum, mit dem die Strahlenbeständigkeit des Kristalls bestimmt wird. Über die bekannte durchstrahlte Dicke des Spaltstückes kann gemäß dem Lambert-Beerschen Gesetz ohne weiteres der maximale Absorptionskoeffizient $\Delta k$ [1/cm] berechnet werden. Zur Erhaltung einer Eichkurve wird dann im Differenzspektrum der Absorptionskoeffizient $\Delta k$ über die Wellenlänge $\lambda$ [nm] aufgetragen. Die Fläche unter dem Differenzspektrum wird im folgenden als Flächenintegral aus der röntgeninduzierten Absorption bezeichnet. Erst durch die Ausbildung des Differenzspektrums ist es möglich, völlig unbearbeitete Kristalle bzw. Spaltstücke zu verwenden, deren Oberflächen nicht definiert sind, da hierbei der Einfluss der Oberflächen eliminiert wird. Darüber hinaus wird auch der Einfluss der Absorptionsbanden eliminiert, die im Kristall vorhanden sind und die nicht auf die Bestrahlung und die Verunreinigung zurückzuführen sind (sogenannte Initialabsorption).

Das erfindungsgemäße Verfahren ist generell für alle Kristalle geeignet. Besonders bevorzugt wird es jedoch für Fluoridkristalle, insbesondere Alkalifluoride und Erdalkalifluoride verwendet, wobei $LiF_2$, $CaF_2$ und $BaF_2$ besonders bevorzugt sind.

Bevorzugte Arbeitswellenlängen sind diejenigen von Lasern, insbesondere von Excimer-Lasern, wie ArF-Excimer-Lasern und $F_2$-Excimer-Lasern, also 193 nm und 157 nm.

Zum Nachweis des erfindungsgemäßen Verfahrens wurden von denselben Kristallen, von denen bereits ein Spaltstück zur Röntgenuntersuchung abgetrennt wurde, auch konventionelle Probenkörper (Messstangen) zur Bestrahlung mit Licht von Excimer-Lasern präpariert. Die Messstangen stammten dabei jeweils von derselben Stelle im Rohkristall, von dem bereits das Spaltstück abgetrennt worden war. Die Messstangen wurden auf eine Länge von 10 cm und auf einen Querschnitt von 2,5 cm x 2,5 cm gesägt. Anschließend wurden die Stirnseiten poliert.

Die Laserbestrahlung erfolgte bei einer Energiedichte 1 - 20 mJ/cm² mit einer Pulsfrequenz 50 - 500 Hz und einer Pulszahl $10^4 - 10^7$ mit einem Excimer-Laser. Bestimmt wurde die Änderung des Absorptionskoeffizienten $\Delta k$ aus der Differenz zwischen Absorption vor der Laserbestrahlung und nach der Laserbestrahlung bei der Anwendungswellenlänge. Diese Änderung der Absorption wird im folgenden laserinduzierte Änderung des Absorptionskoeffizienten $\Delta k$ bezeichnet.

Erfindungsgemäß wurde überraschenderweise gefunden, dass ein linearer Zusammenhang besteht zwischen einer laserinduzierten Änderung des Absorptionskoeffizienten $\Delta k$ wie z.B. bei den zuvor beschriebenen Excimerlaser-Wellenlängen von 193 nm bzw. 157 nm und dem auf die Kristalldicke normierten Flächenintegral der röntgeninduzierten Absorption, insbesonders im Wellenlängenbereich 190 nm bis 1000 nm. Dieser Zusammenhang ergibt sich, wenn die Wertepaare aus laserinduzierter Änderung des Absorptionskoeffizienten $\Delta k$ und dem Flächenintegral der röntgeninduzierten Absorption pro Kristalldicke, die sich jeweils aus den Messungen an Laserstange und Spaltstück desselben Kristalls ergeben, für verschiedene Kristallproben gegeneinander aufgetragen werden. Dazu werden die Werte aus der laserinduzierten Änderung des Absorptionskoeffizienten $\Delta k$ auf die Energiedichte 1 mJ/cm² normiert. Diese Umrechnung ist möglich, da im Bereich der Energiedichten von 1 - 100 mJ/cm² ein linearer Zusammenhang zwischen dem laserinduzierten Absorptionskoeffizienten $\Delta k$ und der eingestrahlten Energiedichte bei Anwendungswellenlänge besteht; insbesondere bei Proben, die aus synthetischen Rohstoffen hergestellt werden.

Die gleichen Untersuchungen wurden unter der Verwendung von Gamma-Bestrahlung mit Co[60] an-

stelle der Röntgenbestrahlung durchgeführt. Die Bestrahlungsbedingungen der gamma-Bestrahlung wurden so gewählt, dass sich wieder Sättigungsbedingungen einstellten. Die gamma-Bestrahlung liefert die gleichen Ergebnisse wie die Röntgenstrahlung, ist aber wesentlich aufwendiger im Betrieb der radioaktiven harten Strahlen Co[60].

Der zuvor beschriebene lineare Zusammenhang zeigt, dass die Messung des Flächenintegrals der röntgeninduzierten Absorption ein Maß für die zu erwartende Strahlungsbeständigkeit bei Bestrahlung mit Excimer-Lasern darstellt. Gleichzeitig gibt die Auftragung der laserinduzierten Änderung des Absorptionskoeffizienten Δk über das Flächenintegral der röntgeninduzierten Absorption das Verhältnis zwischen der laserinduzierten Änderung des Absorptionskoeffizienten Δk und dem Flächenintegral wieder, so dass mit Hilfe dieser Auftragung über die Messung der Flächenintegrale eine absolute Aussage über die zu erwartende Laserstabilität möglich ist.

Die mit dem erfindungsgemäßen Verfahren erhaltenen Kristalle eignen sich zur Verwendung in und zur Herstellung von optischen Linsen, Steppern, Wafern, elektronischen Bauteilen, insbesonders Chips und Computers sowie mikromechanischer Vorrichtungen.

Die Erfindung soll an den folgenden Beispielen näher erläutert werden.

Die untersuchten Kristalle wurden nach der Bridgeman Stockbarger Methode hergestellt. Dazu wurde z. B. synthetisches $CaF_2$-Pulver in einen Tiegel gefüllt. Das Pulver wurde bei einer Temperatur von 1400-1460°C aufgeschmolzen. Durch das Absenken des Tiegels in einem Temperaturfeld wurde der Kristall gezogen. Die Kristallzucht erfolgte unter Vakuum bei $10^{-4}$ - $10^{-5}$ Torr.

Andere bekannte Kristallzuchtverfahren stellen das Czochralski- sowie das Nacken-Kyropoulus-Verfahren dar, die allerdings für die kommerzielle Zucht von CaF2-Kristallen keine bzw. nur eine untergeordnete Bedeutung besitzen. (Lit.: K.-Th. Wilke und J. Bohm, "Kristallzüchtung", Verlag Harri Deutsch, Thun, Frankfurt/Main 1988).

Das kristalline $CaF_2$ ist im Gegensatz zum amorphen Quarzglas, das auch als optisches Bauteil in der DUV-Photolitographie eingesetzt wird, entlang der {111}-Richtungen des Kristalls spaltbar.

Vom Rohkristall konnten somit Spaltstücke abgetrennt werden. Dies wurde zum Beispiel am Boden des Kristalls durchgeführt. Der Boden wurde hierzu zunächst vom Rest des Kristalls abgetrennt. Aus dem Boden wurde dann durch Spalt ein Stück herauspräpariert. Das so erhaltene Spaltstück hatte eine Dicke D von 0,4 - 0,5 cm. Das Spaltstück wurde in einem Zweistrahlspektrometer justiert und die Absorption entlang der Dicke D gemessen (Messung A). Der durchfahrene Wellenlängenbereich reichte von 190 nm bis 1000 nm.

Das Spaltstück wurde nun in einem Gerät zur Röntgenbestrahlung justiert. In dem Gerät wurde das Spaltstück mit einer Energie von 80 - 150 KeV bestrahlt (Dosis: $10^4$ Gy), so dass es zu einer Anregung aller auf Röntgenstrahlung empfindlichen Farbzentren kam (Sättigung). Die Bestrahlung erfolgte entlang der Dicke D.

Das Spaltstück wurde nun wieder im Spektrometer justiert (gleicher Messfleck), wobei eine feste Zeit nach der Bestrahlung eingehalten wurde (hier 2 h) und die Absorption im Wellenlängenbereich 190 nm bis 1000 nm bestimmt (Messung B). Aus der Differenz der Messungen B - A wurde die Änderung der Absorption berechnet (Tabelle 1). Unter Einbeziehung der bekannten Dicke D des Spaltstücks konnte hieraus die Änderung des Absorptionskoeffizienten Δk [1/cm] berechnet werden, die über die Wellenlänge λ [nm] aufgetragen wurde. Aus dieser Auftragung konnte nun das Flächenintegral berechnet werden.

Aus dem verbleibenden Bodenstück des gezogenen Kristalls wurde eine dem Spaltstück örtlich sehr nahe liegende Messstange mit den Maßen Länge L x Breite x Höhe = 100 mm x 25 mm x 25 mm gesägt. Die Messstange wurde an den Stirnseiten poliert, um Streueffekte an der Oberfläche bei Laserbestrahlung zu minimieren. An der Messstange wurde nun entlang der Länge L der Absorptionskoeffizient k [1/cm] vor und nach der Bestrahlung mit einem Excimer-Laser bestimmt und aus diesen beiden Werten die Differenz Δk berechnet. Die Anwendungswellenlängen lagen bei 193 nm (ArF-Excimer-Laser) und 157 nm (F2-Excimer-Laser). Die aufgeführten Messungen wurden für verschiedene gezüchtete Kristalle durchgeführt. Die Werte sind in Tabelle 1 zusammengefasst.

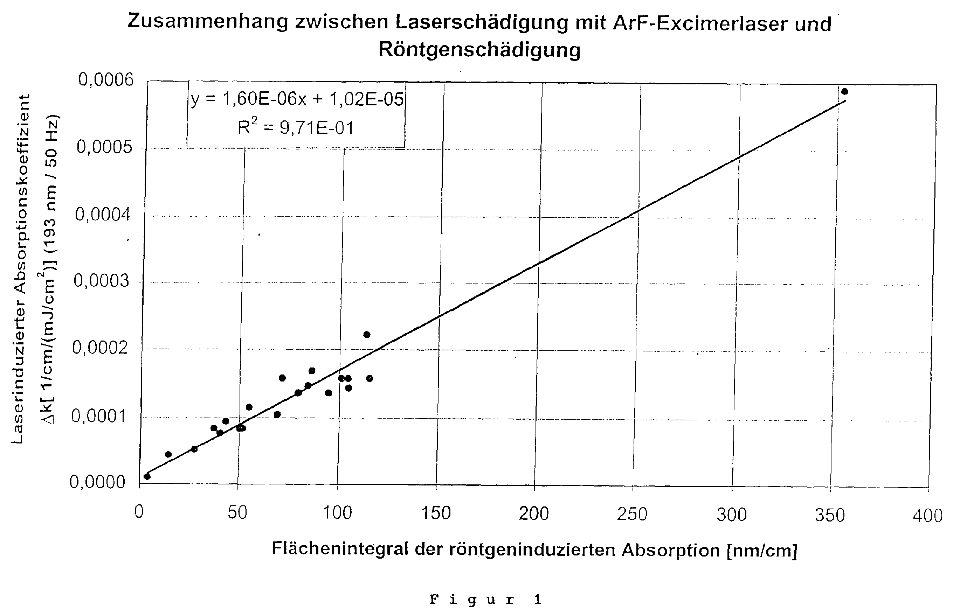

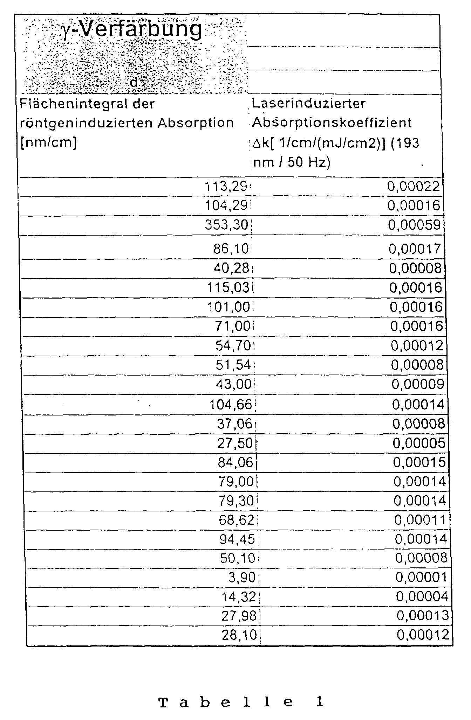

Die Auftragung der Wertepaare aus laserinduzierter Änderung des Absorptionskoeffizienten Δk und dem Flächenintegral der röntgeninduzierten Absorption in Fig. 1 zeigt den linearen Zusammenhang. Die Streuung der Werte ist dabei zu einem wesentlichen Anteil auf Probleme in der Energiestabilität des ArF-Excimer-Lasers zurückzuführen.

Aus dem aufgetragenen Zusammenhang läßt sich durch lineare Regression eine Formel ableiten, welche die Umrechnung von Flächenintegral der röntgeninduzierten Absorption Fl auf die laserinduzierte Änderung des Absorptionskoeffizienten Δk erlaubt:

$$\Delta k \ [1/cm] = 1{,}60E\text{-}6 * Fl \ [nm/cm] + 1{,}02E\text{-}5$$

Die angegebene Funktion eignet sich als Eichkurve und ermöglicht eine rasche Bestimmung des laserinduzierten Absorptionskoeffizienten aus Differenzspektren nach z.B. Röntgenbestrahlung in der Einheit [1/cm/(mJ/cm^2)]. Der Wellenlängenbereich, über den integriert werden muss, erstreckt sich für diese Eichkurve von 190 nm bis 1000 nm (Fig. 1).

Die Eichkurve ist wesentlich, da Anwender ihre optischen Materialien nach der laserinduzierten Ände-

rung des Absorptionskoeffizienten $\Delta k$ bei Anwendungswellenlänge qualifizieren. Bei anderen Laserwellenlängen (Anwendungswellenlängen) ergeben sich andere lineare Zusammenhänge, die der Fachmann leicht ermitteln kann.

Vergleichbare lineare Zusammenhänge werden außerdem gefunden, wenn über einen anderen Wellenlängenbereich als im hier gezeigten Fall integriert wird. Auch besteht die Möglichkeit, die Intensitäten einzelner Absorptionsbanden nach Röntgenverfärbung für den linearen Zusammenhang heranzuziehen.

## Patentansprüche

1. Verfahren zur Bestimmung der Strahlenbeständigkeit von Kristallen gegenüber Arbeitswellenlängen beim späteren Gebrauch durch Bestimmung der Änderung des Absorptionskoeffizienten vor und nach Bestrahlung des Kristalls mit einer energiereichen Strahlungsquelle, **dadurch gekennzeichnet, dass** in einer ersten Messung des Kristalls oder eines Spaltstückes hiervon mit einer Dicke D über einen zuvor festgelegten Wellenbereich von $\lambda_1$ bis $\lambda_2$ mittels eines Spektrophotometers ein Absorptionsspektrum A bestimmt wird,
   dann der Kristall oder das Spaltstück mit der energiereichen Strahlungsquelle unter Ausbildung sämtlicher theoretisch möglicher Farbzentren bestrahlt wird,
   in einer zweiten Messung des so bestrahlten Kristalles bzw. Spaltstückes hiervon über den gleichen Wellenbereich von $\lambda_1$ bis $\lambda_2$ ein Absorptionsspektrum B bestimmt wird und das Flächenintegral des aus dem Absorptionsspekrum A und dem Absorptionsspektrum B gebildeten Differenzspektrums über den Bereich der Wellenlänge $\lambda_1$ bis $\lambda_2$ gebildet und durch die Dicke D dividiert wird und damit der beim späteren Gebrauch durch die Arbeitswellenlänge induzierbare Absorptionskoeffizient $\Delta k$ bestimmt wird.

2. Verfahren nach Anspruch 1, **dadurch gekennzeichnet, dass** die Strahlenquelle eine Röntgenquelle oder $Co^{60}$ sind.

3. Verfahren nach einem der vorhergehenden Ansprüche, **dadurch gekennzeichnet, dass** die Spaltstücke eine Dicke von < 10 mm, vorzugsweise < 5 mm aufweisen.

4. Verfahren nach einem der vorhergehenden Ansprüche, **dadurch gekennzeichnet, dass** der Kristall ein Fluoridkristall ist.

5. Verfahren nach einem der vorhergehenden Ansprüche, **dadurch gekennzeichnet, dass** der Kristall ein $CaF_2$, $BaF_2$, LiF-Kristall ist.

6. Verfahren nach einem der vorhergehenden Ansprüche, **dadurch gekennzeichnet, dass** die Arbeitswellenlänge 193 und/oder 157 nm beträgt.

7. Verfahren nach einem der vorhergehenden Ansprüche, **dadurch gekennzeichnet, dass** der Kristall mit einer Energiedichte von $10^3$-$10^5$ Gy bestrahlt wird.

8. Verfahren nach einem der vorhergehenden Ansprüche, **dadurch gekennzeichnet, dass** der Kristall über einen Zeitraum von 10-360 Minuten bestrahlt wird.

9. Verfahren nach einem der vorhergehenden Ansprüche, **dadurch gekennzeichnet, dass** der festgelegte Wellenbereich $\lambda_1$ bis $\lambda_2$ die Arbeits- oder Anwendungswellenlänge mit einschließt.

10. Verwendung von nach dem Verfahren der Ansprüche 1 bis 9 bestimmten Kristallen zur Herstellung von optischen Linsen, Steppern, Wafern, elektronischen Bauteilen und mikromechanischen Vorrichtungen.

**Zusammenhang zwischen Laserschädigung mit ArF-Excimerlaser und Röntgenschädigung**

$$y = 1{,}60\text{E-}06x + 1{,}02\text{E-}05$$
$$R^2 = 9{,}71\text{E-}01$$

Laserinduzierter Absorptionskoeffizient $\Delta k$[ 1/cm/(mJ/cm$^2$)] (193 nm / 50 Hz)

Flächenintegral der röntgeninduzierten Absorption [nm/cm]

F i g u r  1

| γ-Verfärbung | |
| --- | --- |
| d | |
| Flächenintegral der röntgeninduzierten Absorption [nm/cm] | Laserinduzierter Absorptionskoeffizient $\Delta k[\ 1/cm/(mJ/cm2)]$ (193 nm / 50 Hz) |
| 113,29 | 0,00022 |
| 104,29 | 0,00016 |
| 353,30 | 0,00059 |
| 86,10 | 0,00017 |
| 40,28 | 0,00008 |
| 115,03 | 0,00016 |
| 101,00 | 0,00016 |
| 71,00 | 0,00016 |
| 54,70 | 0,00012 |
| 51,54 | 0,00008 |
| 43,00 | 0,00009 |
| 104,66 | 0,00014 |
| 37,06 | 0,00008 |
| 27,50 | 0,00005 |
| 84,06 | 0,00015 |
| 79,00 | 0,00014 |
| 79,30 | 0,00014 |
| 68,62 | 0,00011 |
| 94,45 | 0,00014 |
| 50,10 | 0,00008 |
| 3,90 | 0,00001 |
| 14,32 | 0,00004 |
| 27,98 | 0,00013 |
| 28,10 | 0,00012 |

T a b e l l e     1

**EP 1 197 477 A1**

**Europäisches Patentamt**

## EUROPÄISCHER RECHERCHENBERICHT

Nummer der Anmeldung

EP 01 12 4674

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | WO 98 07053 A (SEWARD THOMAS P III ;CORNING INC (US)) 19. Februar 1998 (1998-02-19) * Seite 6, Spalte 24 - Seite 7, Spalte 12 * | 1-9 | C03C4/00 |
| A | ARBUZOV V I ET AL: "Study of the thermally stimulated glass structure reconstruction in extruded Li2O.2SiO2 glasses by the method of radiation color center chronospectroscopy" JOURNAL OF NON-CRYSTALLINE SOLIDS, NORTH-HOLLAND PUBLISHING COMPANY, AMSTERDAM, NL, Bd. 231, Nr. 1-2, 1. Juli 1998 (1998-07-01), Seiten 125-133, XP004158544 ISSN: 0022-3093 * das ganze Dokument * | 1-9 | |
| A | H. IMAI ET AL.: "Generation of E' centers and oxygen hole centers in synthetic silica glasses by gamma irradiation" PHYS. REV. B, Bd. 48, Nr. 5, 1. August 1993 (1993-08-01), Seiten 3116-3123, XP002185448 * Seite 3123, Spalte 2 * | 1-9 | **RECHERCHIERTE SACHGEBIETE (Int.Cl.7)** C03C H01S G02B |

-/--

Der vorliegende Recherchenbericht wurde für alle Patentansprüche erstellt

| Recherchenort | Abschlußdatum der Recherche | Prüfer |
|---|---|---|
| MÜNCHEN | 13. Dezember 2001 | Consalvo, D |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

............................................................
& : Mitglied der gleichen Patentfamilie, übereinstimmendes Dokument

9

**Europäisches**
**Patentamt**

**EUROPÄISCHER RECHERCHENBERICHT**

Nummer der Anmeldung

EP 01 12 4674

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | HOSONO H ET AL: "Interaction of F2 excimer laser with SiO2 glasses: Towards the third generation of synthetic SiO2 glasses" NUCLEAR INSTRUMENTS & METHODS IN PHYSICS RESEARCH, SECTION – B: BEAM INTERACTIONS WITH MATERIALS AND ATOMS, NORTH-HOLLAND PUBLISHING COMPANY. AMSTERDAM, NL, Bd. 166-167, Mai 2000 (2000-05), Seiten 691-697, XP004204160 ISSN: 0168-583X * Seite 691, Spalte 2; Abbildung 2 * | 1-9 | |
| A | US 3 269 847 A (COHEN ALVIN J) 30. August 1966 (1966-08-30) * Abbildungen 2,3 * * Spalte 9, Zeile 16 – Spalte 10, Zeile 66 * | 1-9 | |
| A | KARLITSCHEK P ET AL: "Influence of hydrogen on the colour center formation in optical fibers induced by pulsed UV-laser radiation. Part 1: all silica fibers with high-OH undoped core" OPTICS COMMUNICATIONS, NORTH-HOLLAND PUBLISHING CO. AMSTERDAM, NL, Bd. 155, Nr. 4-6, 15. Oktober 1998 (1998-10-15), Seiten 376-385, XP004146469 ISSN: 0030-4018 * Seite 379, Spalte 1 * | 1-9 | **RECHERCHIERTE SACHGEBIETE (Int.Cl.7)** |
| X | EP 0 938 030 A (NIPPON KOGAKU KK) 25. August 1999 (1999-08-25) * Seite 2, Absatz 3 – Absatz 5 * * Seite 3, Absatz 20 – Absatz 21 * * Seite 7, Absatz 53 – Absatz 55 * | 10 | |

-/--

Der vorliegende Recherchenbericht wurde für alle Patentansprüche erstellt

| Recherchenort | Abschlußdatum der Recherche | Prüfer |
|---|---|---|
| MÜNCHEN | 13. Dezember 2001 | Consalvo, D |

EP 1 197 477 A1

| Europäisches Patentamt | EUROPÄISCHER RECHERCHENBERICHT | Nummer der Anmeldung |
| | | EP 01 12 4674 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | EP 0 875 778 A (NIPPON KOGAKU KK) 4. November 1998 (1998-11-04) * Seite 2, Zeile 53 – Seite 3, Zeile 6 * ----- | 10 | |
| | | | **RECHERCHIERTE SACHGEBIETE (Int.Cl.7)** |

Der vorliegende Recherchenbericht wurde für alle Patentansprüche erstellt

| Recherchenort | Abschlußdatum der Recherche | Prüfer |
|---|---|---|
| MÜNCHEN | 13. Dezember 2001 | Consalvo, D |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

& : Mitglied der gleichen Patentfamilie,übereinstimmendes
    Dokument

EPO FORM 1503 03.82 (P04C03)

11

**ANHANG ZUM EUROPÄISCHEN RECHERCHENBERICHT
ÜBER DIE EUROPÄISCHE PATENTANMELDUNG NR.**   EP 01 12 4674

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-12-2001

| Im Recherchenbericht angeführtes Patentdokument | | Datum der Veröffentlichung | Mitglied(er) der Patentfamilie | | Datum der Veröffentlichung |
|---|---|---|---|---|---|
| WO 9807053 | A | 19-02-1998 | EP | 0914301 A2 | 12-05-1999 |
| | | | JP | 2001511105 T | 07-08-2001 |
| | | | WO | 9807053 A2 | 19-02-1998 |
| | | | US | 6205818 B1 | 27-03-2001 |
| | | | US | 2001011465 A1 | 09-08-2001 |
| US 3269847 | A | 30-08-1966 | KEINE | | |
| EP 0938030 | A | 25-08-1999 | US | 5978070 A | 02-11-1999 |
| | | | EP | 0938030 A1 | 25-08-1999 |
| EP 0875778 | A | 04-11-1998 | JP | 10260349 A | 29-09-1998 |
| | | | EP | 0875778 A1 | 04-11-1998 |
| | | | US | 6061174 A | 09-05-2000 |

EPO FORM P0461

Für nähere Einzelheiten zu diesem Anhang : siehe Amtsblatt des Europäischen Patentamts, Nr. 12/82